(19) Europäisches Patentamt
European Patent Office
Office européen des brevets

(11) **EP 1 871 592 B1**

(12) **FASCICULE DE BREVET EUROPEEN**

(45) Date de publication et mention
de la délivrance du brevet:
**11.03.2009 Bulletin 2009/11**

(21) Numéro de dépôt: **06725205.6**

(22) Date de dépôt: **21.03.2006**

(51) Int Cl.:
**B29D 30/06** *(2006.01)*      **B60C 23/04** *(2006.01)*

(86) Numéro de dépôt international:
**PCT/EP2006/060919**

(87) Numéro de publication internationale:
**WO 2006/100245 (28.09.2006 Gazette 2006/39)**

(54) **PROCEDE D'OBTENTION D'UN FIL PREFORME DESTINE A ETRE INTEGRE LORS DE LA FABRICATION D'UN PNEUMATIQUE, ENSEMBLE D'UNE FEUILLE DE GOMME ET D'UN PROFIL PREFORME**

VERFAHREN ZUM ERHALT EINES VORGEFORMTEN DRAHTES, DER WÄHREND DER HERSTELLUNG EINES REIFENS INTEGRIERT WERDEN SOLL, UND EIN KAUTSCHUKFLÄCHENGEBILDE UND EINE EINEN VORGEFORMTEN DRAHT UMFASSENDE ANORDNUNG

METHOD OF OBTAINING A PREFORMED WIRE THAT IS INTENDED TO BE INTEGRATED DURING THE PRODUCTION OF A TYRE, AND ASSEMBLY COMPRISING A SHEET OF RUBBER AND A PREFORMED WIRE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **21.03.2005 FR 0502791**

(43) Date de publication de la demande:
**02.01.2008 Bulletin 2008/01**

(73) Titulaires:
• **Société de Technologie Michelin
63000 Clermont-Ferrand (FR)**
• **Michelin Recherche et Technique S.A.
1763 Granges-Paccot (CH)**

(72) Inventeur: **ROBERT, Michel
F-63200 Cellule (FR)**

(74) Mandataire: **Dequire, Philippe Jean-Marie Denis
23, Place des Carmes-Déchaux
SGD/LG/PI F35 Ladoux
63040 Clermont-Ferrand Cedex 09 (FR)**

(56) Documents cités:
**EP-A- 1 454 770          EP-A- 1 547 824
WO-A-99/29523           US-A1- 2003 132 893
US-A1- 2003 217 797**

**Description**

La présente invention concerne un procédé d'obtention d'un fil préformé destiné à être intégré lors de la fabrication d'un pneumatique, et un ensemble d'une feuille de gomme crue et d'un fil déformable.

La plupart des pneumatiques actuels, notamment les pneumatiques à structure radiale, sont obtenus par mise en oeuvre du procédé de fabrication suivant.

Lors d'une première étape, on assemble sur un tambour cylindrique différents constituants du pneumatique. Parmi ces constituants, on trouve une couche de gomme intérieure étanche, une nappe de carcasse, des tringles puis différentes gommes de bourrage et de protection des flancs. Lors d'une deuxième étape, dite étape de conformation, on déforme les constituants assemblés au cours de la première étape depuis la forme cylindrique donnée par le tambour, jusqu'à une forme d'anneau torique proche de celle du futur pneumatique. Au cours d'une troisième étape, on enroule sur cette forme torique des nappes de ceinture du sommet ainsi qu'une bande de roulement jusqu'à obtenir un bandage. Enfin, au cours d'une quatrième étape, dite de vulcanisation, on place le bandage dans un moule chauffé à une température de l'ordre de 150 °C pour un pneumatique de tourisme de manière à créer les sculptures du pneumatique par moulage et assurer la cohésion de l'ensemble par la vulcanisation.

Certains constructeurs de véhicules automobiles, poids lourds, militaires... équipent les véhicules de systèmes de mesure de la pression des pneumatiques. Pour cela, un pneumatique est généralement équipé d'un capteur de pression et d'un dispositif d'émission de la mesure de pression. Le dispositif d'émission comprend classiquement un émetteur relié à une antenne par un fil de liaison. L'antenne est généralement formée par un fil conducteur.

Il est connu d'intégrer le fil de liaison ou le fil de l'antenne dans le pneumatique lors de la première étape d'assemblage. Ainsi, par son intégration dans la masse du pneumatique, le fil est correctement protégé.

Le fil de liaison ou d'antenne doit résister à la déformation provoquée par l'étape de conformation. Il est donc important d'utiliser un fil approprié. A titre d'exemple, EP 1 454 770 A1 présente un dispositif électronique intégré dans un pneumatique comportant une antenne extensible.

L'invention concerne un procédé d'obtention d'un fil préformé selon les étapes décrites dans la revendication 1, ledit fil préformé étant destiné à être intégré lors de la fabrication d'un pneumatique obtenu par mise en oeuvre d'un procédé de fabrication comprenant :

- une étape d'assemblage sur un tambour cylindrique de constituants du pneumatique, au cours de laquelle on intègre un fil préformé dans une première configuration dite d'intégration ;
- une étape de conformation des constituants assemblés, au cours de laquelle le fil préformé se déforme depuis sa configuration d'intégration vers une seconde configuration dite de conformation ; et
- une étape de vulcanisation des constituants conformés.

L'invention concerne aussi un ensemble d'une feuille de gomme crue et d'un fil préformé obtenu selon la revendication 21.

Des formes avantageuses de l'invention font l'objet des revendications dépendantes.

Pour que le fil résiste à la conformation, il est connu de l'intégrer dans le pneumatique à l'état préformé, par exemple ondulé ou en zigzag, de manière qu'il soit capable de se déformer lorsqu'il est soumis à une contrainte d'extension, à la manière d'un ressort.

Pendant la conformation, le fil s'étire proportionnellement aux extensions subies, il tend naturellement à s'opposer aux efforts qu'il subit et est ainsi susceptible de contrarier l'homogénéité de la conformation résultante dans les composants qui lui sont adjacents. En outre, après la conformation, le fil étiré n'est pas au repos et tend à reprendre sa forme initiale. Les forces de rappel sont proportionnelles à l'extension subie par le fil lors de l'étape de conformation. Ces forces de rappel sont susceptibles de ramener le fil vers sa forme initiale et tout particulièrement lors de l'étape de vulcanisation parce que les couches de gomme ont leur viscosité qui diminue en raison de la température élevée et retiennent moins le fil étiré. En reprenant sa forme initiale, le fil peut entraîner avec lui les composants du pneumatique et notamment déplacer des fils des nappes de carcasse. La structure du pneumatique ainsi obtenu peut donc présenter des défauts qui réduisent sa durée de vie ou qui le rendent moins fiable.

L'invention a pour but de remédier à ces inconvénients en fournissant un procédé d'obtention d'un fil préformé dont l'intégration dans un pneumatique n'est pas préjudiciable à la fabrication du pneumatique.

A cet effet, l'invention a pour objet un procédé d'obtention d'un fil préformé destiné à être intégré lors de la fabrication d'un pneumatique obtenu par mise en oeuvre d'un procédé de fabrication comprenant :

- une étape d'assemblage sur un tambour cylindrique de constituants du pneumatique, au cours de laquelle on intègre un fil préformé dans une première configuration dite d'intégration ;
- une étape de conformation des constituants assemblés, au cours de laquelle le fil préformé se déforme depuis sa configuration d'intégration vers une seconde configuration dite de conformation ; et
- une étape de vulcanisation des constituants conformés ;

**caractérisé en ce qu**'on exécute les étapes suivantes :

- on sélectionne un fil déformable ;

- on détermine une configuration d'intégration pour le fil déformable en fonction du taux de conformation que ledit fil est destiné à subir lors de l'étape de conformation du pneumatique ;
- on déforme ce fil déformable vers la configuration d'intégration ; et
- on maintient ce fil déformable dans la configuration d'intégration à l'aide de moyens de maintien qui sont aptes à se déformer ou à s'effacer lors des étapes de conformation et de vulcanisation.

Le fil préformé est donc contraint dans sa configuration d'intégration. Le niveau de déformation imposé au fil préformé, sa « précontrainte », est fonction du taux de conformation, c'est-à-dire du taux d'extension, qu'il est susceptible de subir lors de l'étape de conformation. Lorsque le fil est intégré dans le pneumatique, on le place de telle sorte que la précontrainte qu'il subit se relâche lors de l'étape de conformation. En conséquence, les forces de rappel du fil préformé diminuent lors de la conformation et les déplacements des composants du pneumatique que ces forces de rappel peuvent induire lors de la fabrication du pneumatique sont très fortement réduits.

Selon un mode de réalisation préférentiel, la déformation imposée au fil déformable vers la configuration d'intégration est une déformation élastique.

Ce mode de réalisation présente deux avantages. Le premier est que les déformations élastiques sont réversibles et l'on peut ainsi bien maîtriser l'amplitude du relâchement des forces de rappel nécessaire pour obtenir un pneumatique vulcanisé sans défauts liés à l'intégration du fil préformé. Le second avantage est que toute déformation plastique est susceptible de créer des zones de fragilité qui peuvent pénaliser la résistance mécanique du fil préformé pendant le roulage du pneumatique. La qualité du pneumatique obtenu est donc supérieure à celle des pneumatiques de l'état de la technique.

Grâce aux moyens de maintien, le fil préformé n'est pas au repos mais conserve sa configuration avant d'être intégré dans le pneumatique. Comme ces moyens de maintien sont déformables, ils ne perturbent pas l'étape de conformation.

On prendra soin de choisir les moyens de maintien de manière qu'ils soient suffisamment rigides pour résister à l'effort engendré par le fil préformé, et qu'ils soient suffisamment souples pour être déformés lors de l'étape de conformation.

Lors de l'étape de conformation du pneumatique, le diamètre du tambour cylindrique augmente et donc les composants du pneumatique sont étirés. Par conséquent, selon un mode de réalisation particulier, la déformation élastique imposée au fil déformable est une compression, pour que ce dernier puisse se relâcher lors de la conformation.

Selon un mode de réalisation particulier, le fil déformable est sensiblement au repos dans sa configuration de conformation.

Dans ce cas, le fil préformé étant destiné à être disposé dans le pneumatique de telle sorte qu'il subisse lors de l'étape de conformation une extension donnée ; dans sa configuration d'intégration, le fil déformable est comprimé avec un taux de compression correspondant.

De préférence, le fil déformable a, au repos, un potentiel d'allongement structurel supérieur aux valeurs d'extension maximales susceptibles d'être subies en roulage dans la zone d'intégration choisie.

L'ordre de grandeur des valeurs d'extension maximales subies en roulage est très variable en fonction de la zone considérée du pneumatique. A titre d'exemple, on peut considérer de 1 à 10 % à proximité des tringles, supérieures à 50 % dans les flancs du pneumatique ou supérieures à 10 % dans la zone du sommet.

De préférence, le fil déformable a une forme au repos ondulée, sinusoïdale ou en zigzag.

Avantageusement, le fil déformable est métallique.

Selon un autre mode de réalisation particulier, la configuration de conformation du fil déformable est différente de la configuration du fil déformable au repos. Par exemple, le fil déformable peut, dans sa configuration de conformation, être comprimé d'un taux de compression résiduel supérieur aux valeurs d'extension maximales susceptibles d'être subies en roulage dans la zone d'intégration choisie.

De cette manière, une fois le pneumatique fabriqué, le fil intégré dans le pneumatique n'est pas au repos. Il peut donc encore se déformer suffisamment pour subir, sans se casser, les déformations dues à l'utilisation normale du pneumatique.

Lorsque le fil déformable est destiné à être mis en place dans une zone du pneumatique subissant une extension donnée, le fil déformable est alors comprimé, dans sa configuration d'intégration, avec un taux de compression fonction de l'extension liée à la conformation du pneumatique et du taux de compression résiduel dans la configuration de conformation.

Selon un mode de réalisation préférentiel, on choisit un fil déformable dont la configuration au repos est une configuration fil droit. Cela veut dire que le fil choisi est directement issu des différentes opérations liées à sa préparation sans avoir subi des déformations plastiques localisées qui seraient susceptibles de créer des zones de fragilité lors de son utilisation ultérieure en pneumatique.

Selon un mode de réalisation particulier, dans sa configuration de conformation, le fil déformable est mis en forme sans présenter de portions droites. En conséquence, le fil préformé intégré dans le pneumatique ne va pas travailler en traction compression mais plutôt en flexion. Cela améliore sensiblement sa résistance en fatigue.

Un procédé d'obtention d'un fil préformé selon l'invention peut en outre comporter l'une ou plusieurs des caractéristiques suivantes :

- le fil déformable comprend un assemblage de brins d'acier ;
- les brins d'acier comportent un revêtement laitonné ;
- le fil déformable comporte quatre brins d'acier laitonnés de diamètre unitaire 0,12 mm;
- on déforme élastiquement et on maintient le fil déformable dans sa configuration d'intégration en le déposant directement dans sa configuration d'intégration sur une feuille de gomme crue ; et
- on déforme élastiquement et on maintient le fil déformable dans sa configuration d'intégration en le déposant directement dans sa configuration d'intégration sur un plateau magnétique, puis on transfère le fil déformable sur une feuille de gomme crue.

Il est à noter qu'un fil multibrin relativement à un fil monobrin de même diamètre a l'avantage d'être plus souple et beaucoup plus résistant aux sollicitations mécaniques de compression et de flexion.

Le procédé selon l'invention est tel que, dans le cas d'un fil déformable métallique, ce fil métallique ayant une limite d'élasticité Rp donnée, dans la configuration d'intégration les contraintes subies en tout point du fil sont inférieures à cette limite d'élasticité Rp.

Préférentiellement, lorsque la limite d'élasticité est définie par la limite conventionnelle d'élasticité $R_{p0,2}$, dans la configuration d'intégration les contraintes $\sigma$ subies en tout point du fil sont telles que :

$$\sigma \prec 0,8 R_{p0,2}$$

Le respect de ces limites de contraintes dans l'étape de déformation du fil métallique entre l'état repos et la configuration d'intégration permet de garantir qu'au cours de cette étape le fil métallique ne subit aucune déformation plastique susceptible de créer autant de zones de fragilité lors de son utilisation ultérieure en pneumatique.

L'invention a également pour objet un ensemble d'une gomme crue et d'un fil préformé obtenu par mise en oeuvre d'un procédé d'obtention d'un fil préformé selon l'invention.

La feuille de gomme crue constitue des moyens de maintien qui sont aptes à se déformer lors de l'étape de conformation et qui sont aptes à s'effacer lors de l'étape de vulcanisation.

L'invention sera mieux comprise à la lecture de la description qui va suivre, donnée uniquement à titre d'exemple et faite en se référant aux dessins annexés dans lesquels :

- la figure 1 est un organigramme représentant les différentes étapes d'un procédé de fabrication d'un pneumatique ;
- la figure 2 est un schéma d'un tambour d'assemblage de pneumatique après l'intégration de l'ensemble selon l'invention ;

- la figure 3 est un schéma du tambour d'assemblage représenté sur la figure 2 pendant la pose de la nappe carcasse ;
- la figure 4 est un schéma du tambour d'assemblage présenté aux figures 2 et 3 après conformation ;
- la figure 5 est un organigramme représentant les différentes étapes d'un procédé d'obtention d'un fil préformé selon l'invention ;
- la figure 6 est un schéma d'un premier mode de réalisation d'un fil préformé selon l'invention dans sa configuration de conformation ;
- la figure 7 est un schéma du fil représenté sur la figure 6 dans sa configuration d' intégration ;
- la figure 8 est une vue d'un second type de fil déformable vu en coupe ;
- la figure 9 est un schéma d'un second mode de réalisation d'un fil préformé selon l'invention dans sa configuration de conformation ; et
- la figure 10 est un schéma du fil représenté sur la figure 9 dans sa configuration d'intégration.

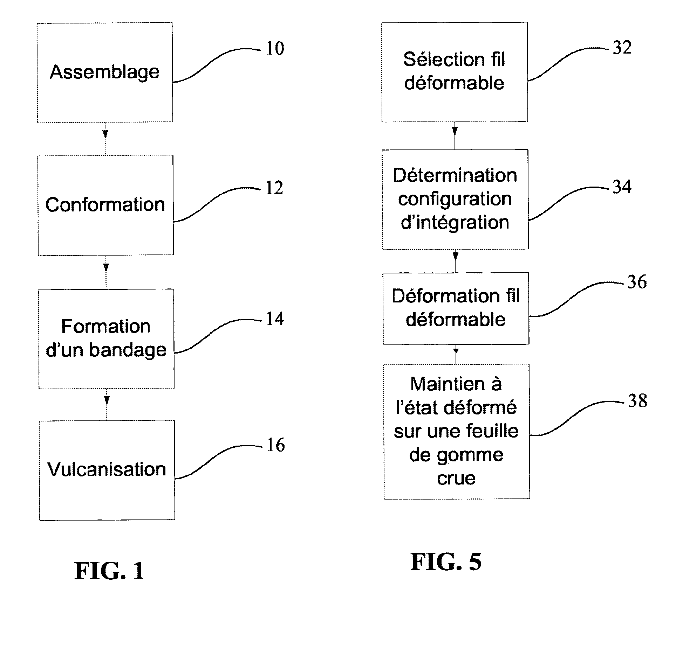

Le procédé classique de fabrication d'un pneumatique représenté sur la figure 1 comprend une première étape 10 d'assemblage, une deuxième étape 12 de conformation, une troisième étape 14 de formation d'un bandage (c'est-à-dire d'un pneumatique non vulcanisé) et une quatrième étape 16 de vulcanisation.

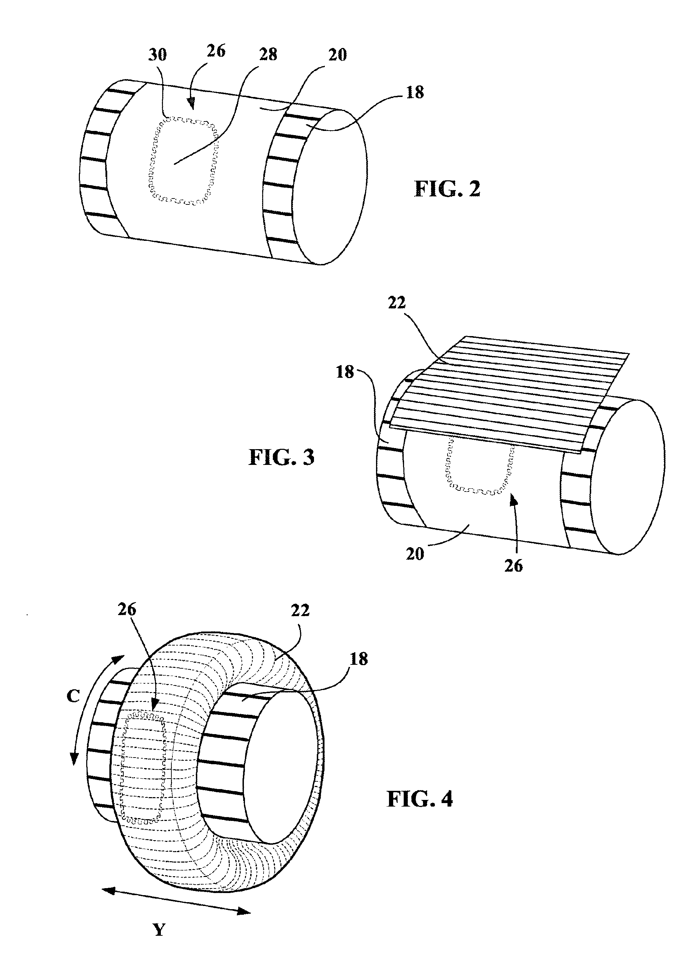

Lors de l'étape 10 d'assemblage présentée aux figures 2 et 3, on assemble sur un tambour cylindrique 18 différents constituants dont un profilé de gomme intérieure étanche 20, une nappe de carcasse 22, des tringles (non représentées) et un ensemble 26 d'une feuille 28 de gomme crue et d'un fil préformé 30. A la figure 2, la gomme intérieure étanche 20 a été posée ainsi que l'ensemble 26 sur sa surface. La figure 3 illustre la pose de la nappe carcasse 22 tout autour de la gomme étanche 20. L'ensemble 26 est, à titre d'exemple, disposé dans le pneumatique entre la gomme étanche 20 et la nappe carcasse 22. Cet ensemble 26 est disposé au centre de la gomme étanche 20. Il se retrouvera ainsi sous la bande de roulement du pneumatique terminé.

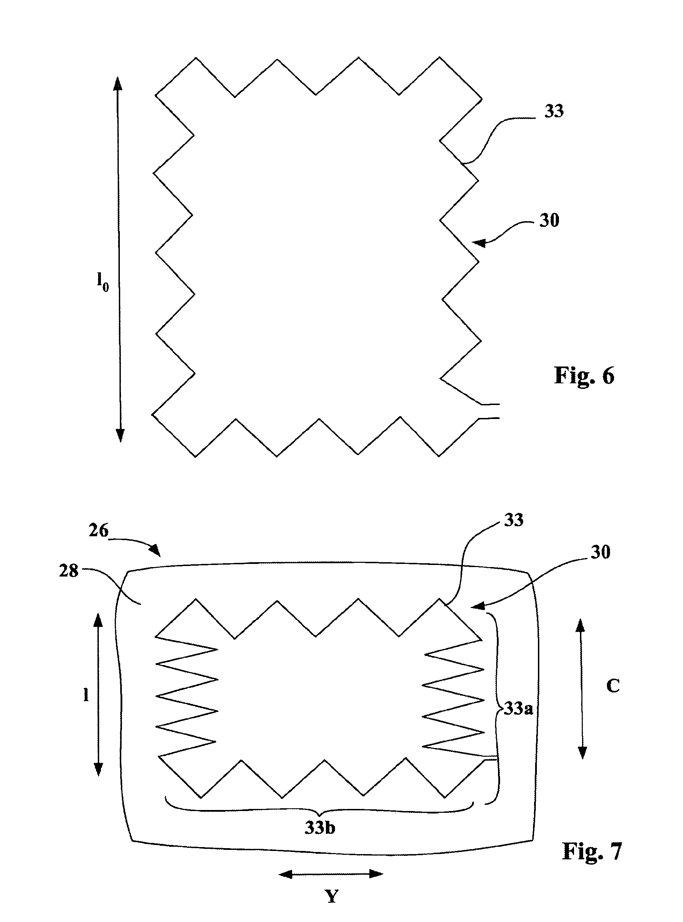

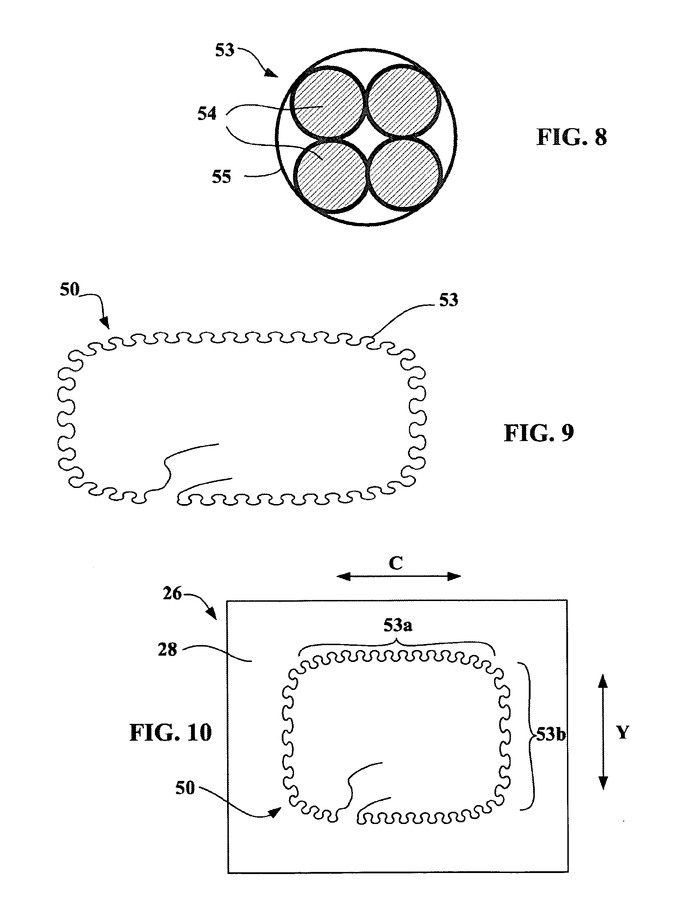

Le fil préformé 30 constitue par exemple l'antenne d'un dispositif d'émission d'un système de mesure de pression (non représenté) du pneumatique. Lors de l'assemblage, le fil préformé 30 est dans une première configuration dite configuration d'intégration représentée sur les figures 7 et 10.

Au cours de l'étape 12 de conformation, les tringles disposées axialement autour des deux extrémités de la gomme étanche 20 sont rapprochées l'une de l'autre et le diamètre de la partie du tambour 18 située entre elles augmente. A la fin de l'étape 12 de conformation, les constituants du pneumatique assemblés lors de l'étape 10 d'assemblage ont une forme torique comme représenté sur la figure 4. En particulier, on constate que l'ensemble 26 de la feuille 28 de gomme crue et du fil préformé 30 s'est étiré dans la direction circonférentielle C du fait de l'augmentation de diamètre du tambour 18. Comme les fils de la nappe carcasse 22 sont beaucoup plus rigides en extension que les mélanges non vulcanisés, la conformation n'entraîne pas d'extension sensible du fil préformé dans la direction axiale Y. Le fil préformé 30 est alors dans une seconde configuration dite configuration de conformation représentée sur les figures 6 et 9.

L'ensemble 26 de la feuille 28 de gomme crue et du fil préformé 30 est obtenu par mise en oeuvre, avant la fabrication du pneumatique, d'un procédé d'obtention d'un fil préformé selon l'invention.

Ce procédé, représenté sur la figure 5, est maintenant décrit en prenant un premier exemple de fil déformable, un fil métallique en forme de zigzag.

Ce procédé comprend une première étape 32 au cours de laquelle on sélectionne un fil déformable 33, par exemple, le fil en forme de zigzag. Ce fil a au repos une configuration voisine de la configuration de conformation. De part sa mise en forme de zigzag, il possède à l'état repos un allongement structurel résiduel largement supérieur à 10 %. Cet allongement lui permet de supporter les contraintes subies lors du roulage du pneumatique dans la zone du sommet pour une intégration dans cette zone.

Au cours d'une deuxième étape 34, on détermine la configuration d'intégration du fil déformable 33. La configuration d'intégration du fil déformable 33 représentée à la figure 7 est définie par le procédé de fabrication du pneumatique, par la configuration de conformation et par la position et l'orientation désirées du fil dans le pneumatique.

En particulier, lors de l'étape 12 de conformation, le fil déformable 33 s'étire principalement selon la direction circonférentielle C. Dans sa configuration d'intégration, le fil déformable 33 comprend donc des régions 33a qui sont davantage comprimées que d'autres régions 33b. Les régions 33a s'étendent selon les directions principales d'étirement C. Les régions 33b sont destinées à être disposées selon la direction axiale Y.

Au cours de la troisième étape 36, on déforme élastiquement le fil déformable 33 en le comprimant depuis l'état repos jusqu'à la configuration d'intégration.

Le taux de compression du fil déformable 33 est sensiblement égal au taux de conformation qui est une valeur caractéristique de la variation de diamètre du tambour 18 au cours de l'étape 12 de conformation. Le taux de conformation est fonction de la zone d'intégration choisie. A proximité des tringles, la variation de diamètre est pratiquement nulle. Le taux de conformation est maximal sous le sommet et peut atteindre 50%. Pour ramener le fil préformé 33 à l'état repos dans la configuration de conformation. Il suffit que la longueur $l_0$ du fil 33a au repos soit comprimée en $l$ de telle sorte que :

$$\frac{l_0 - l}{l} \approx 0,5$$

0,5 étant le taux de conformation.

Lors de la troisième étape 38, le fil 33 déformé est maintenu en position au moyen d'un plateau magnétique non représenté. Un tel plateau, du fait de ses propriétés magnétiques, maintient le fil 33 déformé en position lorsque le fil est doué de propriétés magnétiques.

Une fois le fil déformable 33 positionné sur le plateau magnétique dans la configuration d'intégration, on le dépose ou on le colle sur la feuille 28 de gomme crue au cours d'une étape 38. La feuille 28 de gomme crue constitue alors des moyens de maintien du fil déformable 33 qui sont aptes à se déformer lors de l'étape 12 de conformation et à s'effacer lors de l'étape 16 de vulcanisation.

A l'issue du procédé d'obtention d'un fil préformé, on ne parle plus de fil déformable 33, mais on parle d'un fil préformé 30. C'est l'ensemble 26 de la feuille 28 de gomme crue et du fil 30 préformé qui est destiné à être intégré à un pneumatique lors de sa fabrication.

Grâce à l'invention, les efforts de précontrainte que subit le fil préformé se relâchent pendant la conformation, il tend ainsi à accompagner la conformation au lieu de s'opposer à celle-ci, il ne perturbe pas la conformation des matériaux adjacents. D'autre part, après l'étape 12 de conformation, le fil préformé est dans sa configuration conformée. Or, dans sa configuration conformée le fil préformé 30 est dans une configuration voisine de sa configuration au repos. Par conséquent, le fil préformé 30 ne perturbe pas l'étape 16 de vulcanisation du pneumatique.

La figure 8 présente une vue en coupe d'un second fil déformable 53 utilisable pour être intégré dans un pneumatique. Ce fil 53 est constitué par l'assemblage de quatre brins 54 d'acier laitonnés de diamètre 0,12 mm. Cet assemblage est retordu et le cercle 55 correspond à l'enveloppe extérieure du fil 53. Cet assemblage métallique est suffisamment conducteur pour être utilisé par exemple comme une antenne dans un pneumatique ou pour des liaisons filaires.

La configuration repos de ce fil 53 est une configuration fil droit. La figure 9 présente ce fil 53 dans sa configuration de conformation, c'est-à-dire dans la configuration qu'il aura dans le pneumatique neuf, après toutes les étapes de sa fabrication. Dans cette configuration, le fil est mis en forme avec un allongement résiduel là encore largement supérieur à 10 %, voire 50 % pour pouvoir supporter toutes les contraintes subies en roulage quelle que soit la zone d'intégration choisie. La mise en forme a aussi la caractéristique de ne comporter aucune portion droite. En conséquence, toutes les portions du fil dans le pneumatique seront soumises à des sollicitations de flexion pour lesquelles le fil est très résistant en fatigue et non à des sollicitations de traction-compression plus pénalisantes. Cela permet d'améliorer sensiblement la tenue en fatigue du fil préformé 50.

Comme précédemment, le fil 53 est comprimé fortement dans sa configuration d'intégration dans la direction correspondant à la direction circonférentielle C dans lesquelles les parties 53a doivent être disposées. Les parties 53b destinées à être disposées axialement selon l'axe Y ne sont pas modifiées entre les deux configurations.

Le fil 53 est mis en forme dans sa configuration d'intégration en le déformant de façon élastique. Les contraintes de flexion du fil respectent en tout point la limite d'élasticité conventionnelle $R_p$ et de préférence sont telles que $\sigma \prec 0{,}8 R_{p0,2}$ ; cette limite conventionnelle d'élasticité est décrite notamment dans la norme NF EN 100002-1.

Le fil 53 peut être déformé conformément à la configuration d'intégration à partir de l'état fil droit et directement déposé sur une feuille de gomme crue 28. Cette gomme suffit à le maintenir en position. Le dépôt peut être réalisé manuellement ou automatiquement à l'aide d'un robot programmé de façon approprié selon un gabarit de mise en forme qui garantit les paramètres de mise en forme. On peut aussi comme précédemment décrit utiliser un plateau magnétique.

Les figures 9 et 10 présentent à titre d'exemple une antenne réalisée avec un fil déformable 53. L'utilisation de cet assemblage selon le procédé de l'invention permet de ne pas perturber la fabrication du pneumatique et d'obtenir une excellente résistance à la fatigue en roulage.

**Revendications**

1. Procédé d'obtention d'un fil préformé (30, 50) destiné à être intégré lors de la fabrication d'un pneumatique obtenu par mise en oeuvre d'un procédé de fabrication comprenant :

   - une étape (10) d'assemblage sur un tambour (18) cylindrique de constituants (20, 22, 24, 26) du pneumatique, au cours de laquelle on intègre un fil préformé (30, 50) dans une première configuration dite configuration d'intégration ;
   - une étape (12) de conformation des constituants assemblés, au cours de laquelle le fil préformé (30, 50) se déforme depuis sa configuration d'intégration vers une seconde configuration dite configuration de conformation ; et
   - une étape (16) de vulcanisation des constituants conformés ;

   **caractérisé en ce qu'**on exécute les étapes suivantes :

   - on sélectionne (32) un fil déformable (33, 53) ;
   - on détermine une configuration d'intégration pour le fil déformable en fonction du taux de conformation que ledit fil est destiné à subir lors de l'étape de conformation du pneumatique ;
   - on déforme (34) ce fil déformable (33, 53) vers la configuration d'intégration ; et
   - on maintient (36) ce fil déformable (33, 53) dans la configuration d'intégration à l'aide de moyens (28) de maintien qui sont aptes à se déformer ou à s'effacer lors des étapes de conformation (12) et de vulcanisation (16).

2. Procédé d'obtention d'un fil préformé (30, 50) selon la revendication 1, dans lequel la déformation imposée au fil déformable (33, 53) lors de l'étape (34) est une déformation élastique.

3. Procédé d'obtention d'un fil préformé (30, 50) selon l'une des revendications 1 et 2, dans lequel la déformation imposée au fil déformable (33, 53) est une compression.

4. Procédé d'obtention d'un fil préformé (30) selon la revendication 3, dans lequel le fil déformable (33) est sensiblement au repos dans sa configuration de conformation.

5. Procédé d'obtention d'un fil préformé (30) selon la revendication 4, dans lequel, le fil préformé étant destiné à être disposé dans le pneumatique de telle sorte qu'il subisse lors de l'étape de conformation une extension donnée, dans sa configuration d'intégration, le fil déformable (33) est comprimé avec un taux de compression correspondant.

6. Procédé d'obtention d'un fil préformé (30) selon l'une quelconque des revendications précédentes, dans lequel ledit fil déformable a, au repos, un potentiel d'allongement structurel supérieur aux valeurs d'extension maximales susceptibles d'être subies dans la zone d'intégration en roulage.

7. Procédé d'obtention d'un fil préformé (30) selon la revendication 6, dans lequel le fil déformable a, au repos, une forme ondulée, sinusoïdale ou en zigzag.

8. Procédé d'obtention d'un fil préformé (30) selon l'une quelconque des revendications précédentes, dans lequel le fil déformable (33) est un fil métallique.

9. Procédé d'obtention d'un fil préformé (50) selon la revendication 3, dans lequel la configuration de conformation du fil déformable (53) est différente de la configuration du fil déformable (53) au repos.

10. Procédé d'obtention d'un fil préformé (50) selon la revendication 9, dans lequel, dans sa configuration de conformation, le fil déformable (53) est comprimé d'un taux de compression résiduel supérieur aux valeurs d'extension maximales susceptibles d'être subies dans la zone d'intégration en roulage.

11. Procédé d'obtention d'un fil préformé (50) selon l'une quelconque des revendications précédentes, dans lequel, dans sa configuration de conformation, le fil déformable est mis en forme sans présenter de portions droites.

12. Procédé d'obtention d'un fil préformé (50) selon l'une des revendications 10 et 11, dans lequel, le fil déformable (53) étant destiné à être mis en place dans une zone du pneumatique subissant une extension donnée lors de l'étape de conformation, dans sa configuration d'intégration, le fil déformable (53) est comprimé avec un taux de compression fonction de l'extension liée à la conformation et du taux de compression résiduel dans la configuration de conformation.

13. Procédé d'obtention d'un fil préformé (50) selon l'une des revendications 9 à 12, dans lequel la configuration au repos du fil déformable (53) est une configuration fil droit.

14. Procédé d'obtention d'un fil préformé (50) selon la revendication 13, dans lequel le fil déformable est constitué d'un assemblage de brins d'acier.

15. Procédé d'obtention d'un fil préformé (50) selon la revendication 14, dans lequel les brins d'acier comportent un revêtement laitonné.

16. Procédé d'obtention d'un fil préformé (50) selon la revendication 15, dans lequel le fil métallique comporte quatre brins d'acier laitonnés de diamètre unitaire 0,12 mm.

17. Procédé d'obtention d'un fil préformé (30, 50) selon l'une des revendications 8 et 14 à 16, dans lequel, le fil métallique ayant une limite d'élasticité Rp donnée, dans la configuration d'intégration les contraintes subies en tout point du fil sont inférieures à ladite limite d'élasticité Rp.

18. Procédé d'obtention d'un fil préformé (30, 50) selon la revendication 17, dans laquelle, la limite d'élasticité étant définie par la limite conventionnelle d'élasticité $R_{p0,2}$, dans la configuration d'intégration les contraintes $\sigma$ subies en tout point du fil sont telles que :

$$\sigma \prec 0{,}8 R_{p0,2}$$

19. Procédé d'obtention d'un fil préformé (30, 50) selon l'une quelconque des revendications précédentes, dans lequel on réalise les étapes (34) de déformation élastique du fil déformable (33, 53) et (36) de maintien dudit fil déformable dans la configuration d'intégration en le déposant directement dans sa configuration d'intégration sur une feuille (28) de gomme crue.

20. Procédé d'obtention d'un fil préformé (30, 50) selon l'une des revendications 8 et 14 à 18, dans lequel on réalise les étapes (34) de déformation élastique du fil déformable (33, 53) et (36) de maintien dudit fil déformable (33, 53) dans la configuration d'intégration en le déposant directement dans sa configuration d'intégration sur un plateau magnétique, puis en transférant le fil préformé (30) sur une feuille (28) de gomme crue.

21. Ensemble (26) d'une feuille (28) de gomme crue et d'un fil préformé (30, 50), obtenu par mise en oeuvre d'un procédé d'obtention d'un fil préformé (30, 50) selon l'une des revendications 19 et 20.

**Claims**

1. Method of obtaining a preformed wire (30, 50) intended to be incorporated during the manufacture of a tire obtained by implementing a manufacturing method involving:

    - a step (10) of assembling constituent parts (20, 22, 24, 26) of the tire on a cylindrical drum (18), during which step a preformed wire (30, 50) in a first configuration known as the integration configuration is incorporated;
    - a step (12) of shaping the assembled constituent parts, during which step the preformed wire (30, 50) is deformed from its integration configuration to a second configuration known as the shaped configuration; and
    - a step (16) of curing the shaped constituent parts;

**characterized in that** the following steps are performed:

    - a deformable wire (33, 53) is selected (32);
    - an integration configuration is determined for the deformable wire on the basis of the amount of shaping that said wire is intended to undergo during the tire shaping step;
    - this deformable wire (33, 53) is deformed (34) into the integration configuration; and
    - this deformable wire (33, 53) is held (36) in the integration configuration using holding means (28) which are able to deform or to "disappear" during the shaping (12) and curing (16) steps.

**2.** Method of obtaining a preformed wire (30, 50) according to Claim 1, in which the deformation imposed on the deformable wire (33, 53) during step (34) is an elastic deformation.

**3.** Method of obtaining a preformed wire (30, 50) according to one of Claims 1 and 2, in which the deformation imposed on the deformable wire (33, 53) is a compression.

**4.** Method of obtaining a preformed wire (30) according to Claim 3, in which the deformable wire (33) is more or less at rest in its shaped configuration.

**5.** Method of obtaining a preformed wire (30) according to Claim 4, in which, with the preformed wire intended to be positioned in the tire in such a way that it undergoes a given extension during the shaping step, in its integration configuration, the deformable wire (33) is compressed with a corresponding level of compression.

**6.** Method of obtaining a preformed wire (30) according to any one of the preceding claims, in which said deformable wire has, at rest, a potential for structural elongation greater than the maximum extension values liable to be experienced in the integration region when the tire is running along.

**7.** Method of obtaining a preformed wire (30) according to Claim 6, in which the deformable wire has a corrugated, sinusoidal or zigzag shape at rest.

**8.** Method of obtaining a preformed wire (30) according to any one of the preceding claims, in which the deformable wire (33) is a metal wire.

**9.** Method of obtaining a preformed wire (50) according to Claim 3, in which the shaped configuration of the deformable wire (53) is different than the configuration of the deformable wire (53) at rest.

**10.** Method of obtaining a preformed wire (50) according to Claim 9, in which, in its shaped configuration, the deformable wire (53) is compressed with a residual level of compression greater than the maximum extension values liable to be experienced in the integration region when the tire is running along.

**11.** Method of obtaining a preformed wire (50) according to any one of the preceding claims, in which, in its shaped configuration, the deformable wire is shaped without exhibiting any straight portions.

**12.** Method of obtaining a preformed wire (50) according to one of Claims 10 and 11, in which, with the deformable wire (53) intended to be positioned in a region of the tire that undergoes a given extension during the shaping step, in its integration configuration, the deformable wire (53) is compressed with a level of compression that is a function of the extension associated with the shaping and of the residual level of compression in the shaped configuration.

**13.** Method of obtaining a preformed wire (50) according to one of Claims 9 to 12, in which the configuration of the deformable wire (53) at rest is a straight-wire configuration.

**14.** Method of obtaining a preformed wire (50) according to Claim 13, in which the deformable wire consists of a collection of steel strands.

**15.** Method of obtaining a preformed wire (50) according to Claim 14, in which the steel strands have a brass coating.

**16.** Method of obtaining a preformed wire (50) according to Claim 15, in which the metal wire has four brass-coated steel strands having individual diameters of 0.12 mm.

**17.** Method of obtaining a preformed wire (30, 50) according to one of Claims 8 and 14 to 16, in which, with the metal wire having a given elastic limit Rp, in the integration configuration, the stresses experienced at all points in the wire are below said elastic limit Rp.

**18.** Method of obtaining a preformed wire (30, 50) according to Claim 17, in which, with the elastic limit defined by the conventional elastic limit $R_{p0.2}$, in the integration configuration, the stresses $\sigma$ experienced at all points in the wire are such that:

$$\sigma < 0.8 R_{p0.2}$$

**19.** Method of obtaining a preformed wire (30, 50) according to any one of the preceding claims, in which the steps (34) of elastically deforming the deformable wire (33, 53) and (36) of holding said deformable wire in the integration configuration are performed by laying the deformable wire down directly in its integration configuration onto a sheet (28) of uncured rubber.

**20.** Method of obtaining a preformed wire (30, 50) according to one of Claims 8 and 14 to 18, in which the steps (34) of elastically deforming the deformable wire (33, 53) and (36) of holding said deformable wire (33, 53) in the integration configuration are performed by laying the deformable wire down directly in its integration configuration onto a magnetic plate and then transferring the preformed wire (30) onto a sheet (28) of uncured rubber.

21. Assembly (26) of a sheet (28) of uncured rubber and of a preformed wire (30, 50), obtained by implementing a method of obtaining a preformed wire (30, 50) according to one of Claims 19 and 20.

**Patentansprüche**

1. Verfahren zum Erhalten eines vorgeformten Drahts (30, 50), der dazu vorgesehen ist, bei der Herstellung eines Luftreifens integriert zu werden, der durch Ausführen eines Herstellungsverfahrens erhalten wird, das enthält:

   - einen Schritt (10) des Montierens von Bestandteilen (20, 22, 24, 26) des Luftreifens auf einer zylindrischen Trommel (18), in dessen Verlauf ein vorgeformter Draht (30, 50) in einer ersten so genannten Integrationskonfiguration integriert wird;
   - einen Schritt (12) des Formgebens der zusammengefügten Bestandteile, in dessen Verlauf sich der vorgeformte Draht (30, 50) von seiner Integrationskonfiguration in eine zweite so genannte Formgebungskonfiguration verformt; und
   - einen Schritt (16) des Vulkanisierens der geformten Bestandteile;

   **dadurch gekennzeichnet, dass** die folgenden Schritte ausgeführt werden:

   - Auswählen (32) eines verformbaren Drahts (33, 53);
   - Bestimmen einer Integrationskonfiguration für den verformbaren Draht in Abhängigkeit von dem Formgebungsbetrag, dem der Draht im Formgebungsschritt des Luftreifens unterworfen werden soll;
   - Verformen (34) dieses verformbaren Drahts (33, 53) in die Integrationskonfiguration; und
   - Halten (36) dieses verformbaren Drahts (33, 53) in der Integrationskonfiguration mit Hilfe von Haltemitteln (28), die geeignet sind, sich in dem Formgebungsschritt (12) und in dem Vulkanisierungsschritt (16) zu verformen oder zu verschwinden.

2. Verfahren zum Erhalten eines vorgeformten Drahts (30, 50) nach Anspruch 1, wobei die Verformung, mit der der verformbare Draht (33, 53) im Schritt (34) beaufschlagt wird, eine elastische Verformung ist.

3. Verfahren zum Erhalten eines vorgeformten Drahts (30, 50) nach einem der Ansprüche 1 und 2, wobei die Verformung, mit der der verformbare Draht (33, 53) beaufschlagt wird, eine Kompression ist.

4. Verfahren zum Erhalten eines vorgeformten Drahts (30) nach Anspruch 3, wobei der verformbare Draht (33) in seiner Formgebungskonfiguration im Wesentlichen im Ruhezustand ist.

5. Verfahren zum Erhalten eines vorgeformten Drahts (30) nach Anspruch 4, wobei dann, wenn der vorgeformte Draht dazu vorgesehen ist, im Luftreifen in der Weise angeordnet zu werden, dass er im Formgebungsschritt eine gegebene Ausdehnung erfährt, der verformbare Draht (33) in seiner Integrationskonfiguration mit einem entsprechenden Kompressionsbetrag komprimiert ist.

6. Verfahren zum Erhalten eines vorgeformten Drahts (30) nach einem der vorhergehenden Ansprüche, wobei der verformbare Draht im Ruhezustand ein strukturelles Verlängerungspotential besitzt, das größer als die maximalen Ausdehnungswerte sind, denen er in der Integrationszone beim Rollformen unterworfen werden kann.

7. Verfahren zum Erhalten eines vorgeformten Drahts (30) nach Anspruch 6, wobei der verformbare Draht im Ruhezustand eine wellen-, sinus- oder zickzackartige Form hat.

8. Verfahren zum Erhalten eines vorgeformten Drahts (30) nach einem der vorhergehenden Ansprüche, wobei der verformbare Draht (33) ein Metalldraht ist.

9. Verfahren zum Erhalten eines vorgeformten Drahts (50) nach Anspruch 3, wobei die Formgebungskonfiguration des verformbaren Drahts (53) von der Konfiguration des verformbaren Drahts (53) im Ruhezustand verschieden ist.

10. Verfahren zum Erhalten eines vorgeformten Drahts (50) nach Anspruch 9, wobei der verformbare Draht (53) in seiner Formgebungskonfiguration mit einem Restkompressionsbetrag komprimiert ist, der größer als die maximalen Ausdehnungswerte ist, denen er in der Integrationszone beim Rollformen unterworfen werden kann.

11. Verfahren zum Erhalten eines vorgeformten Drahts (50) nach einem der vorhergehenden Ansprüche, wobei der verformbare Draht in seiner Formgebungskonfiguration geformt wird, ohne dass er geradlinige Abschnitte aufweist.

12. Verfahren zum Erhalten eines vorgeformten Drahts (50) nach einem der Ansprüche 10 und 11, wobei der verformbare Draht (53) dann, wenn er dazu vorgesehen ist, in einer Zone des Luftreifens angeordnet zu werden, die im Formgebungsschritt eine gegebene Ausdehnung erfährt, in seiner Integrationskonfiguration mit einem Kompressionsbetrag komprimiert ist, der von der Ausdehnung abhängt, die mit der Formgebung und mit dem Restkompressionsbetrag in der Formgebungskonfiguration zusammenhängt.

13. Verfahren zum Erhalten eines vorgeformten Drahts (50) nach einem der Ansprüche 9 bis 12, wobei die Konfiguration im Ruhezustand des verformbaren Drahts (53) eine geradlinige Drahtkonfiguration ist.

14. Verfahren zum Erhalten eines vorgeformten Drahts (50) nach Anspruch 13, wobei der verformbare Draht durch eine Anordnung von Stahllitzen gebildet ist.

15. Verfahren zum Erhalten eines vorgeformten Drahts (50) nach Anspruch 14, wobei die Stahllitzen eine vermessingte Beschichtung aufweisen.

16. Verfahren zum Erhalten eines vorgeformten Drahts (50) nach Anspruch 15, wobei der Metalldraht vier vermessingte Stahllitzen mit einem Einheitsdurchmesser von 0,12 mm aufweist.

17. Verfahren zum Erhalten eines vorgeformten Drahts (30, 50) nach einem der Ansprüche 8 und 14 bis 16, wobei dann, wenn der Metalldraht eine gegebene Elastizitätsgrenze $R_p$ besitzt, in der Integrationskonfiguration die Beanspruchungen, denen der Draht an jedem seiner Punkte unterworfen wird, kleiner als die Elastizitätsgrenze $R_p$ sind.

18. Verfahren zum Erhalten eines vorgeformten Drahts (30, 50) nach Anspruch 17, wobei dann, wenn die Elastizitätsgrenze durch die herkömmliche Elastizitätsgrenze $R_{p0,2}$ definiert ist, in der Integrationskonfiguration die Beanspruchungen σ, denen der Draht an jedem seiner Punkte unterworfen wird, derart sind, dass:

$$\sigma < 0{,}8R_{p0,2}.$$

19. Verfahren zum Erhalten eines vorgeformten Drahts (30, 50) nach einem der vorhergehenden Ansprüche, wobei der Schritt (34) des elastischen Verformens des verformbaren Drahts (33, 53) und der Schritt (36) des Haltens des verformbaren Drahts in der Integrationskonfiguration **dadurch** ausgeführt werden, dass er auf einer Rohgummiplatte (28) direkt in seiner Integrationskonfiguration abgelegt wird.

20. Verfahren zum Erhalten eines vorgeformten Drahts (30, 50) nach einem der Ansprüche 8 und 14 bis 18, wobei der Schritt (34) des elastischen Verformens des verformbaren Drahts (33, 53) und der Schritt (36) des Haltens des verformbaren Drahts (33, 53) in seiner Integrationskonfiguration **dadurch** ausgeführt werden, dass er auf einer magnetischen Platte direkt in seiner Integrationskonfiguration abgelegt wird und dass der vorgeformte Draht (30) dann auf eine Rohgummiplatte (28) umgeladen wird.

21. Anordnung (26) aus einer Rohgummiplatte (28) und einem vorgeformten Draht (30, 50), der durch Ausführen eines Verfahrens zum Erhalten eines vorgeformten Drahts (30, 50) nach einem der Ansprüche 19 und 20 erhalten wird.

| Assemblage | 10 |

| Conformation | 12 |

| Formation d'un bandage | 14 |

| Vulcanisation | 16 |

**FIG. 1**

| Sélection fil déformable | 32 |

| Détermination configuration d'intégration | 34 |

| Déformation fil déformable | 36 |

| Maintien à l'état déformé sur une feuille de gomme crue | 38 |

**FIG. 5**

**FIG. 2**

**FIG. 3**

**FIG. 4**

33

30

$l_0$

**Fig. 6**

26

28

33

30

$l$

C

33a

33b

Y

**Fig. 7**

FIG. 8

FIG. 9

FIG. 10

## RÉFÉRENCES CITÉES DANS LA DESCRIPTION

**Documents brevets cités dans la description**

- EP 1454770 A1